# EUROPEAN PATENT APPLICATION

(11) **EP 4 498 235 A1**
(43) Date of publication of application: **29.01.2025**
(21) Application number: 24188794.2
(22) Date of filing: 16.07.2024
(51) Int. Cl.: G06F 8/656, G06F 9/448, G06F 11/14

(54) **DEVICE, SOFTWARE SWITCH PROGRAM, AND SOFTWARE SWITCH METHOD**

(30) Priority: 27.07.2023 JP 2023122338
(71) Applicant: Yokogawa Electric Corporation, Tokyo 180-8750 (JP)
(72) Inventor: SUZUKI, Isamu, Musashino-shi, Tokyo, 180-8750 (JP); SHINGU, Oki, Musashino-shi, Tokyo, 180-8750 (JP)
(74) Representative: Winter, Brandl - Partnerschaft mbB

(57) **Abstract**

A device (1) includes hardware (2) configured to transmit process data to an upper system (7); a storage unit (3) that stores first software (41) that runs to cause the hardware (2) to transmit the process data to the upper system (7) and second software (42) that runs to cause the hardware (2) to transmit the process data to the upper system (7); and a switch unit (6) that switches software in operation from the first software (41) to the second software (42), wherein the switch unit (6) switches the software in operation from the first software (41) to the second software (42) after a given process based on the second software (42) is executed while the first software (41) is being in operation.

## Description

### BACKGROUND OF THE INVENTION

### 1. Field of the Invention

The disclosure relates to a device, a software switch program, and a software switch method and, for example, relates to a device, a software switch program, and a software switch method that are usable to collect process data.

### 2. Description of the Related Art

It is known that, as disclosed in Patent Literature 1, a software update is made in a device, such as a field device, after the device is set.

Patent Literature 1: Japanese Laid-open Patent Publication No. 2004-295299.

In a software update, software is switched to new software. At that time, when a device is restarted, a problem that the device is not usable during the time occurs.

One aspect of the disclosure is switching software without restarting a device.

### SUMMARY OF THE INVENTION

A device according to one aspect of the present disclosure includes: hardware configured to transmit process data to an upper system; a storage unit that stores first software that runs to cause the hardware to transmit the process data to the upper system and second software that runs to cause the hardware to transmit the process data to the upper system; and a switch unit that switches software in operation from the first software to the second software, wherein the switch unit switches the software in operation from the first software to the second software after a given process based on the second software is executed while the first software is being in operation.

A software switch program according to one aspect of the present disclosure causes a processor to execute a process of switching software in operation from first software to second software in a device including: hardware configured to transmit process data to an upper system; and a storage unit that stores the first software that runs to cause the hardware to transmit the process data to the upper system and the second software that runs to cause the hardware to transmit the process data to the upper system, wherein the process includes switching the software in operation from the first software to the second software after a given process based on the second software is executed while the first software is being in operation.

A software switch method according to one aspect of the present disclosure includes switching software in operation from first software to second software in a device including: hardware configured to transmit process data to an upper system; and a storage unit that stores the first software that runs to cause the hardware to transmit the process data to the upper system and the second software that runs to cause the hardware to transmit the process data to the upper system, wherein the switching includes switching the software in operation from the first software to the second software after a given process based on the second software is executed while the first software is being in operation.

### BRIEF DESCRIPTION OF THE DRAWINGS

FIG. 1 is a diagram illustrating an example of a schematic configuration of a system 100 including a device 1 according to an embodiment;
FIG. 2 is a diagram illustrating an example of a basic configuration of software;
FIG. 3 is a diagram illustrating an example of a database 51;
FIG. 4 is a diagram illustrating an example of a database 52;
FIG. 5 is a diagram illustrating an example of a process (software switch method) that is executed by the device 1;
FIG. 6 is a diagram illustrating an example of a process (software switch method) that is executed by the system 100;
FIG. 7 is a diagram illustrating the example of the process (software switch method) that is executed by the system 100;
FIG. 8 is a diagram illustrating the example of the process (software switch method) that is executed by the system 100; and
FIG. 9 is a diagram illustrating an example of a hardware configuration.

### DETAILED DESCRIPTION OF THE PREFERRED EMBODIMENTS

With reference to the drawings, an embodiment will be described below. The same elements are denoted with the same reference numerals and redundant description will be omitted as appropriate.

### Embodiment

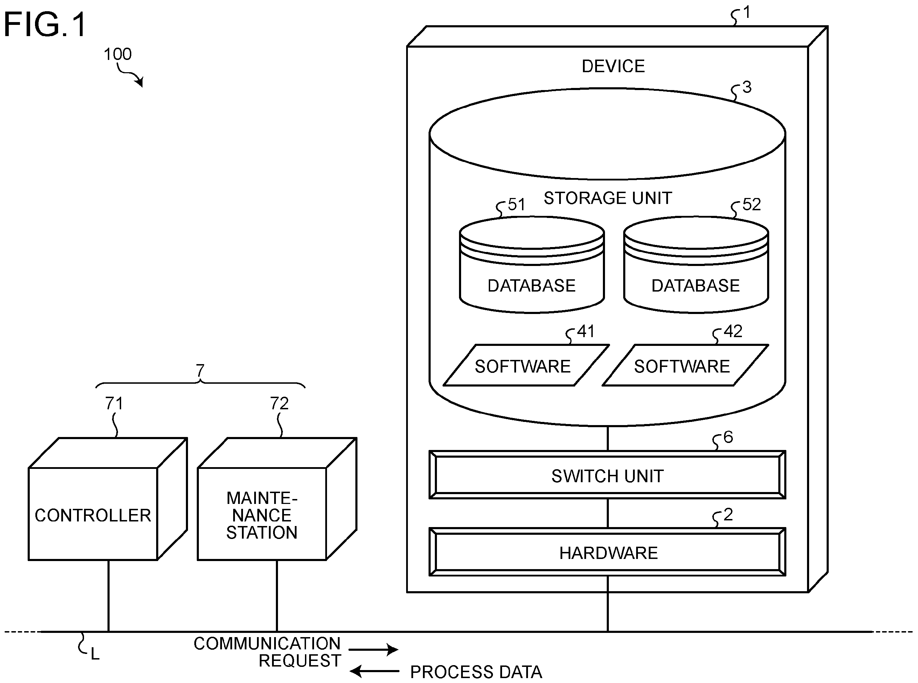

FIG. 1 is a diagram illustrating an example of a schematic configuration of a system 100 including a device 1 according to the embodiment. The system 100 includes the device 1 and an upper system 7. The device 1 and the upper system 7 are connected such that the device 1 and the upper system 7 can communicate with each other via a communication line L (on-line). For example, the device 1 generates process data cyclically and transmits the process data to the upper system 7 in response to a request from the upper system 7. The device is also referred to as an apparatus, equipment, or the like.

The process data is data on a process. An example of the process is a process in a production plant, such as a chemical plant or a power plant, and the process data in that case can contain various sets of process data that can be acquired in the plant. Various sets of data other than the process data on the plant can serve as the process data. An example of other process data is data on a monitoring process, maintenance process, or a prediction process. An example of the monitoring process is a process of monitoring social infrastructure, such as a bridge or a tunnel. Unless otherwise described, the device 1 transmits the process data on a plant to the upper system 7.

FIG. 1 exemplifies a block configuration of the device 1. The device 1 includes hardware 2, a storage unit 3, and a switch unit 6.

The hardware 2 is configured to transmit process data to the upper system 7. The hardware 2 is configured to have desired functions by including constituents, such as a central processing unit (CPU), such as a micro controller unit (MCU), and a memory and peripherals that the CPU uses. An example of the functions includes a function of arithmetic operations for generating process data and a function of communicating with the upper system 7.

For example, the hardware 2 includes a computing unit that acquires a sensor value of a sensor that is arranged in the plant and converts the sensor value into a measurement value. An example of the sensor is a pressure sensor, a temperature sensor, a flow sensor, or the like. The sensor value is a voltage value representing a physical quantity (pressure, temperature, flow, or the like) to be measured. The measured value represents the physical quantity to be measured.

The storage unit 3 stores information that is used by the device 1. Software 41, software 42, a database 51, and a database 52 are exemplified as information that is stored in the storage unit 3. The software can be also referred to as a program, program data, or the like.

The software 41 is first software that runs to cause the hardware 2 to transmit the process data to the upper system 7. The software 41 in operation generates the process data. When the hardware 2 has a function of arithmetic operations for generating process data as described above, process data is generated by collaboration between the software 41 and the hardware 2.

A controller 71 of the upper system 7 transmits the request to the device 1 at freely-selected timing. The request is also referred to as a communication request. The communication request includes a request to transmit process data. The software 41 transmits (causes the hardware 2 to transmit) the process data to the controller 71 in response to the communication request from the controller 71. The transmission in response to the communication request is also referred to as a communication response.

The software 42 is second software that runs to cause the hardware 2 to transmit the process data to the upper system 7. Similar to the software 41, the software 42 in operation generates process data and transmits a communication response to a communication request from the controller 71.

For example, the software 42 is software of a newer version than the software 41 and is scheduled to be used instead of the software 41. The software 42 can be also referred to as software of an additional function of the software 41.

The software 42 need not be stored in the storage unit 3 initially. For example, a maintenance station 72 transmits the software 42 to the device 1 while the software 41 is being in operation and accordingly the software 42 is stored in the storage unit 3.

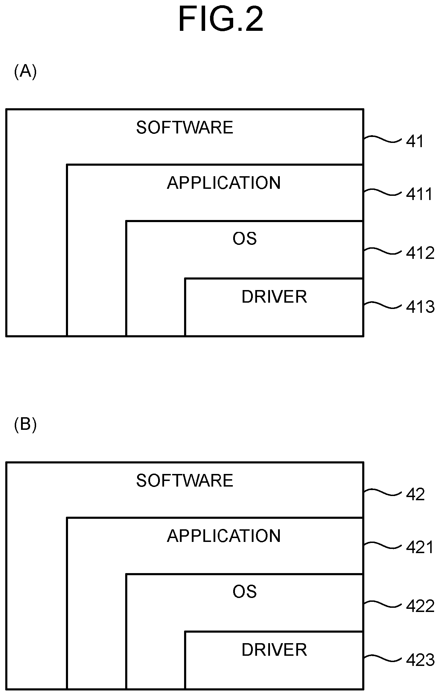

FIG. 2 is a diagram illustrating a basic configuration of software. As illustrated in (A) in FIG. 2, the software 41 includes an application 411, an operating system (OS) 412, and a driver 413. The application 411 is an application program that is set in order to realize the function of the device 1 and runs on the OS 412. The driver 413 provides interaction between the hardware 2 and the OS 412 and enables an access from the application 411 running on the OS 412 to the hardware 2.

The software 42 has the same configuration as that of the software 41. In other words, as illustrated in (B) in FIG. 2, the software 42 includes an application 421, an OS 422, and a driver 423. These elements are described similarly to parts corresponding to the software 41.

Accesses from the software 41 and the software 42 to the hardware 2 are made via the switch unit 6 (FIG. 1) more specifically and details thereof will be described below.

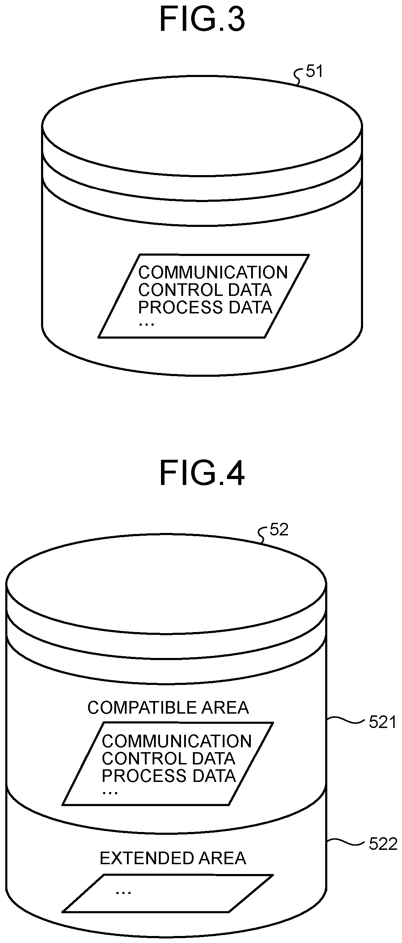

Back to FIG. 1, the database 51 is a first database that the software 41 refers to. The software 41 in operation can perform accessing the database 51, adding data to the database 51, updating the data in the database 51, deleting the data in the database 51, etc. The database 51 will be described also with reference to FIG. 3.

FIG. 3 is a diagram illustrating an example of the database 51. Communication control data and process data are exemplified as the data of the database 51. The communication control data is data on control on communication between the hardware 2 and the upper system 7 and includes, for example, a setting for communication of the hardware 2 with the upper system 7. The process data is as described above. The process data that is stored in the database 51 may be process data before being transmitted to the upper system 7 (that has not been transmitted) or may be process data that has been transmitted.

Back to FIG. 1, the database 52 is a second database that the software 42 refers to. Similar to the software 41 and the database 51 described above, the software 42 can access the database 52, perform adding, updating, deleting data, etc. The database 52 will be described also with reference to FIG. 4.

FIG. 4 is a diagram illustrating an example of the database 52. The database 52 includes a compatible area 521 and an extended area 522. The compatible area 521 is an area for ensuring compatibility of the software 42 with the software 41. The data of the compatible area 521 is the same as the data of the database 51 (FIG. 3) and the data is copied from the database 51 as described below. The data of the extended area 522 is data for providing a function that the software 41 does not have among the functions of the software 42 (a function extended from the software 41).

Back to FIG. 1, the switch unit 6 mediates an access from the software 41 and the software 42 to the hardware 2 or controls the software 41 and the software 42. Control on the software 41 and the software 42 by the switch unit 6 includes starting the sets of software and suspending and restarting processes executed by the sets of software. The function of the switch unit 6, for example, is realized by a program at a level lower than the programs of the software 41 and the software 42. The switch unit 6 can be also referred to as an intermediate layer that is positioned between the hardware 2 and the software 41 and the software 42.

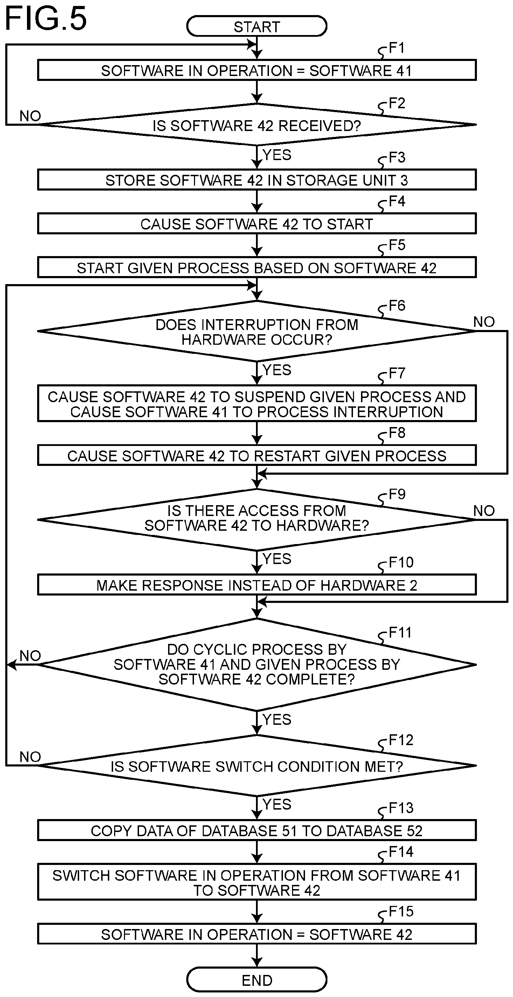

The switch unit 6 switches the software in operation from the software 41 to the software 42. Switching the software is also referred to as a switchover, a software update, or the like. The conventional technique has a problem that it is necessary to restart the device 1 to switch the software and accordingly, during that time, process data cannot be transmitted from the device 1 to the upper system 7, etc. In order to deal with the problem, in the embodiment, it is possible to switch the software in operation from the software 41 to the software 42 without restarting the device 1 under the control by the switch unit 6. Description will be given also with reference to FIG. 5.

FIG. 5 is a diagram illustrating an example of a process that is executed in the device 1 (software switch method). Assume that, initially, the software 41 is in operation and the software 42 is not stored in the storage unit 3 yet.

At step F1, the software 41 is in operation. The software 41 generates process data, for example, cyclically and transmits a communication response containing the process data to the controller 71 in response to a communication request from the controller 71. The cycle of generation of process data may differ from the cycle of communication response. A process for generating process data is also referred to as a cyclic process. Each time the cyclic process completes, the software 41 can notify the switch unit 6 of the completion.

The maintenance station 72 transmits (the program data of) the software 42 to the device 1 at freely-selected timing during operation of the software 41. The device 1 receives the software 42 from the maintenance station 72. The software 41 is in operation also in the subsequent steps F2 to F13.

At step F2, it is determined whether the software 42 is received (step F2). This determination is made by, for example, the switch unit 6 or the software 41. When the software 42 is received (step F2: Yes), the process proceeds to step F3. When not (step F2: No), the process returns to step F1 and the process at step F1 and step F2 is repeated until the software 42 is received.

At step F3, the software 41 stores the software 42 that is received at the previous step F2 in the storage unit 3.

At step F4, the switch unit 6 starts the software 42.

At step F5, a given process based on the software 42 is started. The given process is a process that is executed after the software 42 is started and, for example, is a process that is necessary for the started software 42 to enter a state in which the software is able to generate process data and transmit the process data to the upper system 7 in collaboration with the hardware 2.

An example of the given process is an initialization process for initializing the hardware 2 in the software 42. For example, by the initialization process, the hardware 2 is set in a state of being able to communicate with the upper system 7. Data on the setting can correspond to the communication control data (FIG. 3) described above. Unless otherwise described, the given process is the initialization process. The given process and the initialization process may be read as each other within a range without inconsistency.

The process of initializing the hardware 2 described above has completed when the software 41 is in operation and thus such a process need not be further performed practically after the software 42 starts. For this reason, the practical process of initializing the hardware 2 can be omitted by emulation to be described below.

In steps F6 to F11, the switch unit 6 controls the software 41 and the software 42 such that the given process in the software 42 completes while causing the software 41 to run similarly as before.

At step F6, the switch unit 6 determines whether an interruption from the hardware 2 occurs. The interruption may be an interruption that occurs in the hardware 2 in response to a communication request from the controller 71 (communication interruption) or an interruption that occurs in the hardware 2 differently (internal interruption). When an interruption occurs (step F6: Yes), the process proceeds in sequence according to steps F7 to F9. When not (step F6: No), the process in step F7 and step F8 is skipped and the process proceeds to step F9.

At step F7, the switch unit 6 causes the software 42 to suspend the given process and causes the software 41 to process the interruption. The software 41 is able to process the interruption as before. The processing the interruption by the software 41 completes and then the process proceeds to step F8.

At step F8, the switch unit 6 causes the software 42 to restart the given process. It is possible to move the given process forward while avoiding the effect of the interruption as described above. When the given process completes, the software 42 notifies the switch unit 6 of the completion and, when not, does not make such a notification.

At step F9, the switch unit 6 determines whether there is an access from the software 42 to the hardware 2. The access here is a hardware access that is made while the software 42 is executing the given process and includes a read access and a write access. The read access is, for example, an access for reading a value that relates to the setting in the hardware 2, or the like. The write access is, for example, an access for writing, in the hardware 2, a value that relates to the setting in the hardware 2, or the like. When there is a hardware access (step F9: Yes), the process proceeds in sequence according to step F10 and step F11. When not (step F9: No), the process at step F10 is skipped and the process proceeds to step F11.

At step F10, instead of the hardware 2, the switch unit 6 makes a response to the hardware access from the software 42. It can be described that the switch unit 6 emulates the hardware 2. Such emulation makes it possible to prevent an effect caused by a practical access of the software 42 to the hardware 2 on operations of the software 41, etc.

The above-described response that is made by the switch unit 6 may be a response that does not cause an error in the given process in the software 42. Specifically, the switch unit 6 simulates typical operations of the hardware 2 in a normal state such that the software 42 is not in an error sequence and sends a response that the software 42 expects the hardware 2 to make to the software 42. To the software 42, it looks as if the accessed hardware 2 is operating normally and therefore the given process can proceed without occurrence of any error. The switch unit 6 that performs such emulation is designed to perform operations corresponding to a sequence of the given process (for example, an initialization sequence) based on the specifications of interfaces (I/F) of both the software 42 and the hardware 2, an initialization procedure, etc. In an example, when the software 42 writes in a register #1 of the hardware 2 and expects the value of the register #2 to change, the switch unit 6 sends a positive response to the write access (write request) to the register #1. The positive response may be a response indicating that the writing succeeds. To the read access to the register #2 (read request), the switch unit 6 sends the value of the register #2 according to the writing in the register #1 to the software 42.

At step F11, the switch unit 6 determines whether the cyclic process performed by the software 41 and the given process performed by the software 42 has completed. The software 41 notifies the switch unit 6 of completion of the cyclic process as described above and thus the completion is known. As described above, the software 42 notifies the switch unit 6 of the completion of the given process. When both notifications are received, the switch unit 6 determines that the cyclic process and the given process have completed. When the processes have completed (step F11: Yes), the process proceeds to step F12. When not (step F11: No), the process is returned to step F6.

At step F12, the switch unit 6 determines whether a software switch condition is met. For example, the maintenance station 72 of the upper system 7 transmits a software switch instruction to the device 1 at freely-selected timing. The switch unit 6 determines that the software switch condition is met when the instruction from the maintenance station 72 has been received. Alternatively, a time or a time slot at which or in which the software is switched may be set previously based on an instruction from the maintenance station 72 and, when it is at the time or in the time slot, the switch unit 6 may determine that the software switch condition is met. When the software switch condition is met (step F12: Yes), the process proceeds to step F13. When not (step F12: No), the process is returned to step F6.

At step F13, the software 41 copies the data of the database 51 to the database 52. The communication control data and the process data (FIG. 3) in the database 51 are copied to the compatible area 521 (FIG. 4) of the database 52. It can be described that the compatible area 521 of the database 52 is made have the same data as the data of the database 51 (equalization). Accordingly, compatibility of the software 42 with the software 41 is ensured.

More specifically, copying the communication control data in the database 51 to the database 52 makes it possible to turn over information necessary for the device 1 to communicate with the upper system 7 to the database 52 that the software 42 refers to. Copying the process data in the database 51 to the database 52 makes it is possible to turn over the process data that has been generated by the software 41 so far to the database 52 that the software 42 refers to. Particularly, executing this process at the timing of completion of the cyclic process performed by the software 41 makes it possible to turn over all the process data including the latest process data.

At step F14, the switch unit 6 switches the software in operation from the software 41 to the software 42. Thereafter, the process that has been performed by the software 41 is executed by the software 42.

At step F15, the software 42 is in operation. The software 42, for example, cyclically generates process data and transmits a communication response containing the process data to the controller 71 in response to a communication request from the controller 71.

According to the above-described method, it is possible to switch the software in operation from the software 41 to the software 42 without restarting the device 1. The device 1 need not be restarted and therefore it is possible to maintain communication between the upper system 7 and the device 1 when switching the software. Accordingly, the problem that transmission of process data from the device 1 to the upper system 7 is disabled does not occur.

When the device 1 need be restarted, for example, the user has to switch the software (for example, operate the upper system 7 to make an instruction for switching) at appropriate timing also in consideration of stopping the device 1 or the system 100 that results from restarting the device 1. In the embodiment, because it is possible to switch the software at freely-selected timing in the device 1, the user does not consume time as described above.

For example, when the device 1 transmits the process data of the plant to the upper system 7, it is possible to switch the software in parallel with operation (also can be referred to as working) of the plant. Thus, flexibility of plans, such as maintenance operations of the plant, increases. Non-necessity for stopping the system 100 makes it possible to shorten or eliminate downtime in the system 100, which leads to improvement in cost.

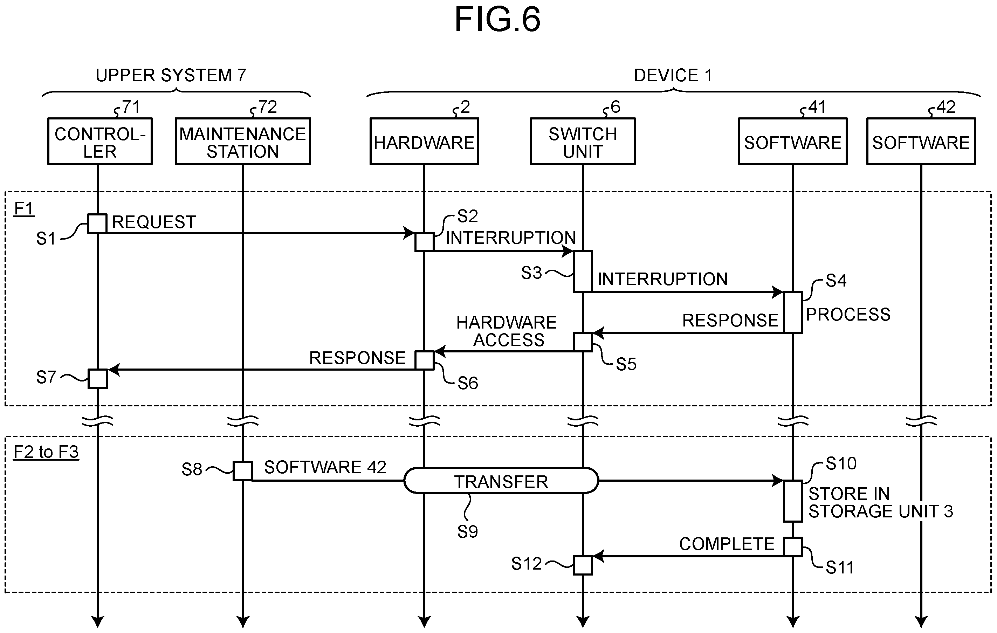

FIGS. 6 to 8 are diagrams illustrating an example of the process that is executed in the system 100 (software switch method). Description of the content redundant to that described above will be omitted as appropriate.

FIG. 6 illustrates some processes corresponding to steps F1 to F3 in FIG. 5 described above. The controller 71 transmits a request (S 1). The request is the communication request described above and the request can include a request to transmit process data. In response to the request from the controller 71, an interruption (communication interruption) occurs in the hardware 2 (S2). The switch unit 6 causes the software 41 to process the interruption (S3). The software 41 processes the interruption and makes a response (S4). The response indicates that the interruption process completes and contains the process data herein. The switch unit 6 mediates an access from the software 41 to the hardware 2 (S5). The hardware 2 transmits the response to the controller 71 (S6). The controller 71 receives the response (S7).

The maintenance station 72 transmits (program data of) the software 42 to the device 1 (S8). The software 42 is transferred to the software 41 via the hardware 2 and the switch unit 6 (S9). The software 41 stores the software 42 in the storage unit 3 (S10) and notifies the switch unit 6 of the completion (S 1 1). The switch unit 6 receives a notification of the completion from the software 41 (S12).

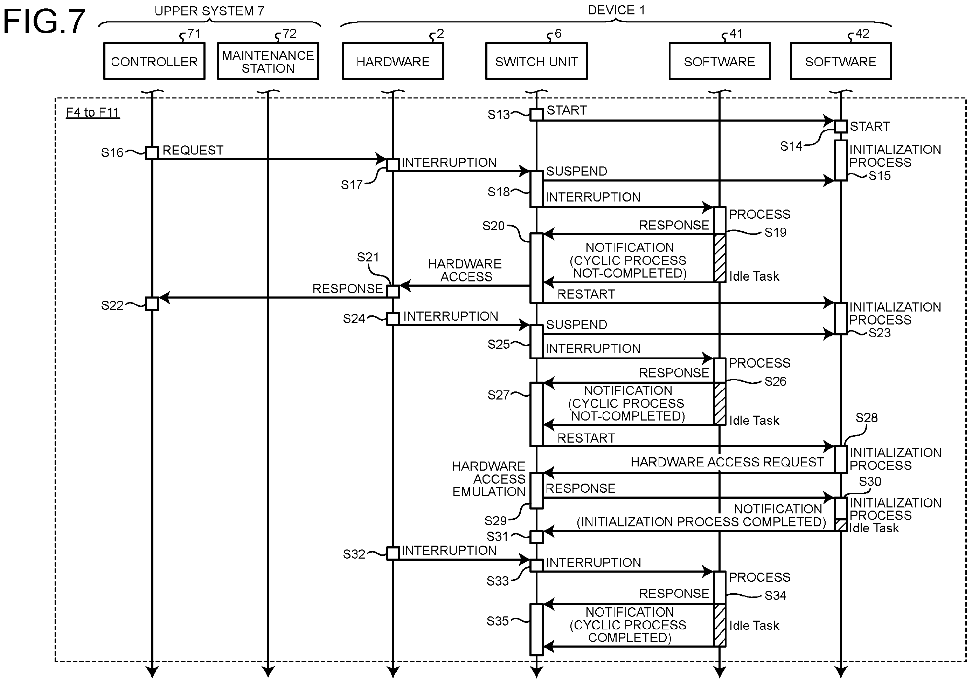

FIG. 7 illustrates some processes corresponding to steps F4 to F 11 in FIG. 5 described above. The switch unit 6 causes the software 42 to start (S 13). The software 42 starts and starts the initialization process (S14, S 15).

The controller 71 transmits a request (S16). An interruption (communication interruption) occurs in the hardware 2 (S 17). The switch unit 6 causes the software 42 to suspend the initialization process and causes the software 41 to process the interruption (S 18). The software 41 processes the interruption and makes a response (S 19). Thereafter, the software 41 enters an IdleTask state in which no process is executed and notifies the switch unit 6 of being in the state and of whether the cyclic process has completed (S19). In the example, the cyclic process has not completed.

The switch unit 6 mediates an access from the software 41 to the hardware 2 and causes the software 42 to restart the initialization process (S20). The hardware 2 transmits a response to the controller 71 (S21). The controller 71 receives a response (S22). On the other hand, the software 42 restarts the initialization process (S23).

In the hardware 2, an interruption (internal interruption) occurs (S24). The switch unit 6 causes the software 42 to suspend the initialization process and causes the software 41 to process the interruption (S25). The software 41 processes the interruption and makes a response (S26). The software 41 enters the IdleTask state and notifies the switch unit 6 of being in the state and of whether the cyclic process has completed (S26). In the example, the cyclic process has not completed. The switch unit 6 causes the software 42 to restart the initialization process (S27).

The software 42 restarts the initialization process and requests the switch unit 6 for a hardware access request (mediating an access to the hardware 2) (S28). Instead of the hardware 2 (emulating the hardware 2), the switch unit 6 makes a response to the hardware access from the software 42 (S29). In response to the response, the software 42 continues the initialization process and, when the initialization process completes, notifies the switch unit 6 of the completion (S30). The switch unit 6 receives the notification of the completion from the software 42 (S31).

In the hardware 2, an interruption (internal interruption) occurs (S32). The switch unit 6 causes the software 41 to process the interruption (S33). The software 41 processes the interruption and makes a response (S34). The software 41 enters the IdleTask state and notifies the switch unit 6 of being in the state and of whether the cyclic process has completed (S34). In the example, the cyclic process has completed. The switch unit 6 receives the notification of the completion from the software 42 (S35).

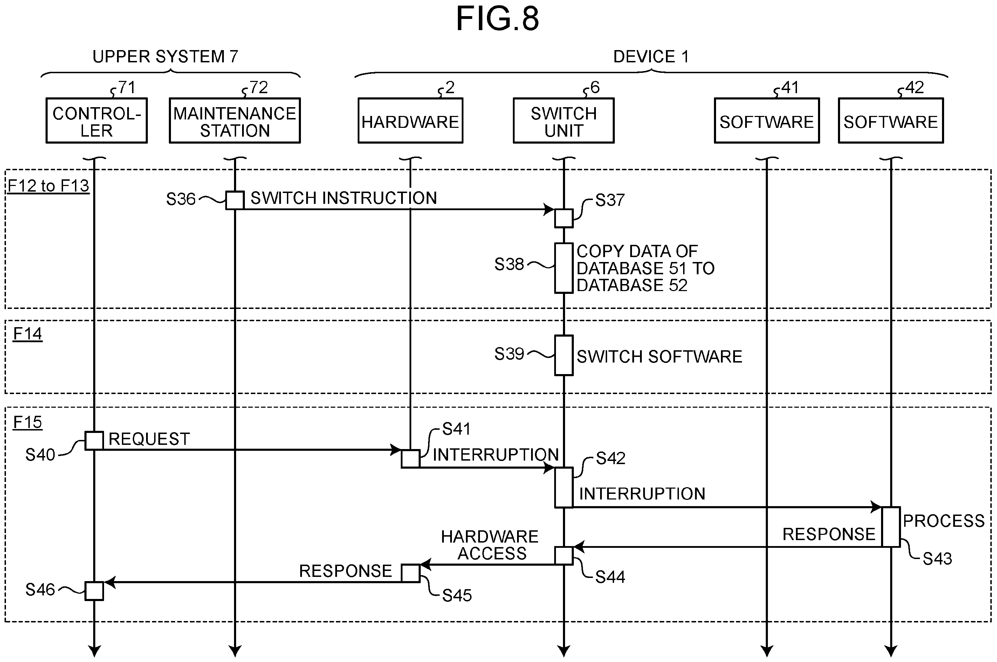

FIG. 8 illustrates some processes corresponding to steps F12 to F15 in FIG. 5 described above. The maintenance station 72 transmits a software switch instruction to the device 1 (S36). The switch unit 6 receives the switch instruction from the maintenance station 72 (S37). The switch unit 6 copies the data of the database 51 to the database 52 (S38). The switch unit 6 switches the software in operation from the software 41 to the software 42 (S39). Thereafter, the switch unit 6 performs, on the software 42, the operations that have been performed on the software 41.

The controller 71 transmits a request (S40). An interruption (communication interruption) occurs in the hardware 2 (S41). The switch unit 6 causes the software 42 to process the interruption (S42). The software 42 processes the interruption and makes a response (S43). The switch unit 6 mediates an access form the software 41 to the hardware 2 (S44). The hardware 2 transmits the response to the controller 71 (S45). The controller 71 receives the response (S46).

For example, each element of the system 100 operates as illustrated in FIGS. 6 to 8 and thus it is possible to switch the software in operation from the software 41 to the software 42 without restarting the device 1.

### Modification or Application

The disclosed technique is not limited to the above-described embodiment. Some modifications or applications will be described.

The system 100 may include a plurality of sets of the device 1. Applying the technique described above makes it possible to collectively switch (update) sets of software in operation while keeping operations of all the set of the device 1. For example, it is possible to collectively switch the software of all the sets of the device 1 based on a time, a condition, etc., that are specified previously.

The following method is assumed as specifying a time. For example, after the given process based on the software 42 completes, the maintenance station 72 issues an instruction to switch the software to each set of the device 1. The sets of the device 1 switch the software in sequence from the device 1 in a state of being able to switch the software, for example, the device 1 of which software 42 is stored in the storage unit 3 and of which cyclic process has completed. Alternatively, a timer is mounted on the device 1 and, when the software 42 is transmitted from the maintenance station 72 to the device 1, information that specifies a software switch time is transmitted together. The device 1 switches the software when the specified time comes.

The area in which the sets of device 1 are set may be divided according to the levels of the risk of an operational stop of the device 1, or the like, as an example of horizontal application. The software may be switched in sequence from the device 1 that is set in an area at a low risk. When switching the software of all the sets of the device 1 in the same area completes, the software of the sets of the device 1 in an area at a higher risk is switched in stages. Even if some sort of failure occurs in switching the software, it is possible to find the problem and deal with the problem at the stage of switching the software of the device 1 in the area at a low risk.

### Example of Hardware Configuration

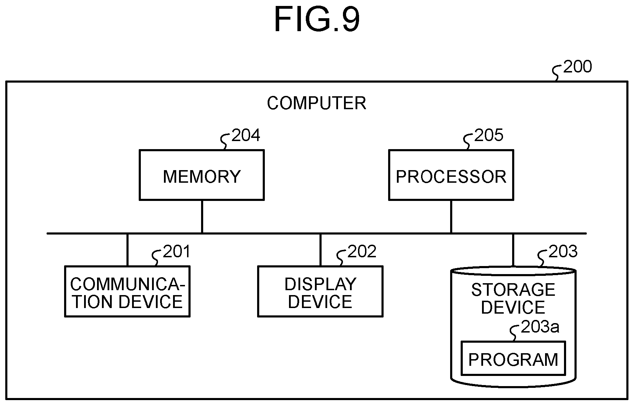

FIG. 9 is a diagram illustrating an example of a hardware configuration. The device 1 described above is configured by including a computer 200 that is exemplified. A communication device 201, a display device 202, a storage device 203, a memory 204, and a processor 205 that are connected mutually via a bus, or the like, are exemplified as the hardware configuration of the computer 200.

The communication device 201 is a network interface card, or the like, and enables communication with other devices. The communication device 201 can correspond to the hardware 2 of the device 1. The display device 202 can correspond to the hardware 2.

Various types of data are stored in the storage device 203 and the memory 204. A specific example of the storage device 203 includes a hard disk drive (HDD), a read only memory (ROM), and a random access memory (RAM). The memory 204 may be part of the storage device 203. The storage device 203 can correspond to the storage unit 3 of the device 1.

A program 203a is exemplified as the data that is stored in the storage device 203. The program 203a is a program (software) that causes the computer 200 to function as the device 1. An example of the program 203a is a program (also referred to as a software switch program) that provides the functions of the software 41, the software 42, and the switch unit 6 described above and that causes the computer to execute the processes performed by the functions.

The processor 205 executes various types of processing. For example, the processor 205 reads (reads out) the program 203a from the storage device 203 and loads the program 203a into the memory 204, thereby causing the computer 200 to execute the various types of processing executed in the device 1. The processor 205 can correspond the hardware 2 of the device 1.

The program 203a can be distributed collectively or separately via a network, such as the Internet. The program 203a can be collectively or separately recorded in a computer-readable recording medium, such as a hard disk, a flexible disk (FD), a CD-ROM, or a digital versatile disc (DVD), can be read by the computer 200 from the recording medium, and thus can be executed.

The controller 71 and the maintenance station 72 can be configured by including the computer 200 as illustrated in the drawing.

The technique described above, for example, can be specified as follows. One of the disclosed techniques is the device 1. As described with reference to FIGS. 1 to 8, etc., the device 1 includes the hardware 2 configured to transmit process data (for example, the process data of the plant) to the upper system 7; the storage unit 3 that stores the software 41 (first software) that runs to cause the hardware 2 to transmit the process data to the upper system 7 and the software 42 (second software) that runs to cause the hardware 2 to transmit the process data to the upper system 7; and the switch unit 6 that switches software in operation from the software 41 to the software 42. The switch unit 6 switches the software in operation from the software 41 to the software 42 after a given process based on the software 42 (for example, the initialization process of initializing the hardware 2 in the software 42) is executed while the first software is being in operation (F11: Yes, F14, S30 and S39). According to the device 1 described above, it is possible to switch the software without restarting the device 1.

As described with reference to FIG. 1, FIG. 5, FIG. 8, etc., the switch unit 6 may switch the software in operation from the software 41 to the software 42 in response to an instruction from the upper system 7 (for example, the maintenance station 72) (F12: Yes, F14, S36, S39). It is thus possible to switch the software at desired timing remotely (by remote operation).

As described with reference to FIG. 1, FIGS. 3 to 5, FIG. 8, etc., the storage unit 3 may store the database 51 (first database) that the software 41 refers to and the database 52 (second database) that the software 42 refers to, and, after copying data in the database 51 to the database 52, the switch unit 6 may switch the software in operation from the software 41 to the software 42 (F13, F14, S38, and S39). It is thus possible to ensure compatibility of the software 42 with the software 41.

As described with reference to FIG. 1, FIG. 3, FIG. 4, etc., the data of database 51 that is copied by the switch unit 6 to the database 52 may include data (communication control data) on control on communication between the hardware 2 and the upper system 7 (for example, the controller 71). It is thus possible to turn over information necessary for the device 1 to communicate with the upper system 7 to the database 52 that the software 42 refers to.

As described with reference to FIG. 1, FIG. 3, FIG. 4, etc., the software 41 in operation may generate the process data and the data of the database 51 that the switch unit 6 copies to the database 52 may contain process data that is generated by the software 41. It is thus possible to turn over the process data that the software 41 has generated so far to the database 52 that the software 42 refers to.

As described with reference to FIG. 1, FIG. 5, FIG. 7, FIG. 8, etc., the software 41 in operation may execute the cyclic process including generation of the process data (S 19, S26, and S34) and the switch unit 6 may switch the software in operation from the software 41 to the software 42 after the cyclic process executed by the software 41 completes (F11: Yes, F14, S35 and S39). It is thus possible to turn over all the process data including the latest process data and generated while the software 41 is being in operation.

As described with reference to FIG. 1, FIG. 5, FIG. 7, etc., when an interruption from the hardware 2 occurs during the given process of the second software 42, the switch unit 6 may cause the software 42 to suspend the given process and cause the software 41 to process the interruption (F6: Yes, F7, S18 and S25). The software 41 thus is able to process an interruption as before.

As described with reference to FIG. 1, FIG. 5, FIG. 7, etc., the interruption from the hardware 2 may occur in response to reception of a request (for example, a request to transmit process data from the controller 71) from the upper system 7 by the hardware 2. Causing the software 41 to process such an interruption makes it possible to keep making a response to the request from the upper system 7, for example, transmitting the process data.

As described with reference to FIG. 1, FIG. 5, FIG. 7, etc., when the processing the interruption by the software 41 completes, the switch unit 6 may cause the software 42 to restart the given process (F8, S20 and S27). It is thus possible to proceed with the given process based on the software 42 while avoiding the effect of the interruption.

As described with reference to FIG. 1, FIG. 5, FIG. 7, etc., instead of the hardware 2, the switch unit 6 may make a response to an access from the software 42 that is executing the given process to the hardware 2 (F 10 and S29). In that case, the switch unit 6 may make a response from the software 42 that is executing the given process to the hardware 2 such that no error is caused in the given process. For example, the switch unit 6 may make a positive response indicating that writing succeeds to a write access from the software 42 that is executing the given process to the hardware 2 and send a value that is expected by the software 42 to the hardware 2 to a read access from the software 42 that is executing the given process to the hardware 2. For example, such emulation of the hardware 2 makes it possible to prevent an effect caused by a practical access of the software 42 to the hardware 2 on operations of the software 41, etc.

As described with reference to FIG. 1, FIG. 5, FIG. 7, FIG. 8, etc., the software 41 in operation may execute the cyclic process including generation of the process data (S 19, S26, and S34), the software 41 may notify the switch unit 6 of completion of the cyclic process when the cyclic process completes (S34), the software 42 may notify the switch unit 6 of completion of the given process when the given process completes (S30), and the switch unit 6 may switch the software in operation from the software 41 to the software 42 after receiving both the notifications from the software 41 and the software 42 (F11/ Yes, F14, S39). It is thus possible to switch the software at appropriate timing.

The program 203a (software switch program) described with reference to FIGS. 1 to 9 is also one of the disclosed techniques. The program 203a causes the processor 205 to execute a process of switching the software in operation from the software 41 to the software 42 in the device 1 described above. The process includes switching the software in operation from the software 41 to the software 42 after the given process based on the software 42 is executed while the software 41 is being in operation. The program 203a also makes it possible to switch the software without restarting the device 1 as described above.

The method (software switch method) described with reference to FIGS. 1 to 8, etc., is also one of the disclosed techniques. The method includes a step of switching software in operation from the software 41 to the software 42 (F14). The switching step includes switching the software in operation from the software 41 to the software 42 after the given process based on the software 42 is executed while the software 41 is being in operation (F11: Yes, F14, S30, and S39). The method also makes it possible to switch the software without restarting the device 1 as described above.

Some examples of combinations of the disclosed technical features will be described below.
(1) A device comprising:
   hardware configured to transmit process data to an upper system;
   a storage unit that stores first software that runs to cause the hardware to transmit the process data to the upper system and second software that runs to cause the hardware to transmit the process data to the upper system; and
   a switch unit that switches software in operation from the first software to the second software,
   wherein the switch unit switches the software in operation from the first software to the second software after a given process based on the second software is executed while the first software is being in operation.
(2) The device according to (1), wherein the switch unit switches the software in operation from the first software to the second software in response to an instruction from the upper system.
(3) The device according to (1) or (2), wherein the storage unit stores a first database that the first software refers to and a second database that the second software refers to, and
   after copying data in the first database to the second database, the switch unit switches the software in operation from the first software to the second software.
(4) The device according to (3), wherein the data of the first database that is copied by the switch unit to the second database includes data on control on communication between the hardware and the upper system.
(5) The device according to (3) or (4), wherein the first software in operation generates the process data, and
   the data of the first database that the switch unit copies to the second database contains process data that is generated by the first software.
(6) The device according to any one of (1) to (5), wherein the first software in operation executes a cyclic process including generation of the process data, and
   the switch unit switches the software in operation from the first software to the second software after the cyclic process executed by the first software completes.
(7) The device according to any one of (1) to (6), wherein the given process includes an initialization process for initializing the hardware in the second software.
(8) The device according to any one of (1) to (7), wherein the process data includes process data on a plant.
(9) The device according to any one of (1) to (8), wherein, when an interruption from the hardware occurs during the given process of the second software, the switch unit causes the second software to suspend the given process and causes the first software to process the interruption.
(10) The device according to (9), wherein the interruption from the hardware occurs in response to reception of a request from the upper system.
(11) The device according to (10), wherein the request from the upper system includes a request to transmit the process data.
(12) The device according to any one of (9) to (11), wherein, when the processing the interruption by the first software completes, the switch unit causes the second software to restart the given process.
(13) The device according to any one of (1) to (12), wherein, instead of the hardware, the switch unit makes a response to an access from the second software that is executing the given process to the hardware.
(14) The device according to (13), wherein the switch unit makes a response to an access from the second software that is executing the given process to the hardware such that no error is caused in the given process
(15) The device according to (13) or (14), wherein the switch unit makes a positive response indicating that writing succeeds to a write access from the second software that is executing the given process to the hardware, and
   the switch unit sends a value that is expected by the second software to the hardware to a read access from the second software that is executing the given process to the hardware.
(16) The device according to any one of (1) to (15), wherein the first software in operation executes a cyclic process including generation of the process data,
   when the cyclic process completes, the first software notifies the switch unit of the completion of the cyclic process,
   when the given process completes, the second software notifies the switch unit of the completion of the given process, and
   after being notified by both the first software and the second software, the switch unit switches the software in operation from the first software to the second software.
(17) A software switch program that causes a processor to execute a process of switching software in operation from first software to second software in a device including:
   hardware configured to transmit process data to an upper system; and
   a storage unit that stores the first software that runs to cause the hardware to transmit the process data to the upper system and the second software that runs to cause the hardware to transmit the process data to the upper system,
   wherein the process includes switching the software in operation from the first software to the second software after a given process based on the second software is executed while the first software is being in operation.
(18) A software switch method comprising switching software in operation from first software to second software in a device including:
   hardware configured to transmit process data to an upper system; and
   a storage unit that stores the first software that runs to cause the hardware to transmit the process data to the upper system and the second software that runs to cause the hardware to transmit the process data to the upper system,
   wherein the switching includes switching the software in operation from the first software to the second software after a given process based on the second software is executed while the first software is being in operation.

## Claims

1. A device (1) comprising:
hardware (2) configured to transmit process data to an upper system (7);
a storage unit (3) that stores first software (41) that runs to cause the hardware (2) to transmit the process data to the upper system (7) and second software (42) that runs to cause the hardware (2) to transmit the process data to the upper system (7); and
a switch unit (6) that switches software in operation from the first software (41) to the second software (42),
wherein the switch unit (6) switches the software in operation from the first software (41) to the second software (42) after a given process based on the second software (42) is executed while the first software (41) is being in operation.

2. The device (1) according to claim 1, wherein the switch unit (6) switches the software in operation from the first software (41) to the second software (42) in response to an instruction from the upper system (7).

3. The device (1) according to claim 1 or 2, wherein the storage unit (3) stores a first database (51) that the first software (41) refers to and a second database (52) that the second software (42) refers to, and
after copying data in the first database (51) to the second database (52), the switch unit (6) switches the software in operation from the first software (41) to the second software (42).

4. The device (1) according to claim 3, wherein the data of the first database (51) that is copied by the switch unit (6) to the second database (52) includes data on control on communication between the hardware (2) and the upper system (7).

5. The device (1) according to claim 3 or 4, wherein the first software (41) in operation generates the process data, and
the data of the first database (51) that the switch unit (6) copies to the second database (52) contains process data that is generated by the first software (41).

6. The device (1) according to any one of claims 1 to 5, wherein the first software (41) in operation executes a cyclic process including generation of the process data, and
the switch unit (6) switches the software in operation from the first software (41) to the second software (42) after the cyclic process executed by the first software (41) completes.

7. The device (1) according to any one of claims 1 to 6, wherein the given process includes an initialization process for initializing the hardware (2) in the second software (42).

8. The device (1) according to any one of claims 1 to 7, wherein the process data includes process data on a plant.

9. The device (1) according to any one of claims 1 to 8, wherein, when an interruption from the hardware (2) occurs during the given process of the second software (42), the switch unit (6) causes the second software (42) to suspend the given process and causes the first software (41) to process the interruption.

10. The device (1) according to claim 9, wherein the interruption from the hardware (2) occurs in response to reception of a request from the upper system (7).

11. The device (1) according to claim 10, wherein the request from the upper system (7) includes a request to transmit the process data.

12. The device (1) according to any one of claims 9 to 11, wherein, when the processing the interruption by the first software (41) completes, the switch unit (6) causes the second software (42) to restart the given process.

13. The device (1) according to any one of claims 1 to 12, wherein, instead of the hardware (2), the switch unit (6) makes a response to an access from the second software (42) that is executing the given process to the hardware (2).

14. The device (1) according to claim 13, wherein the switch unit (6) makes a response to an access from the second software (42) that is executing the given process to the hardware (2) such that no error is caused in the given process.

15. The device (1) according to claim 13 or 14, wherein the switch unit (6) makes a positive response indicating that writing succeeds to a write access from the second software (42) that is executing the given process to the hardware (2), and
the switch unit (6) sends a value that is expected by the second software (42) to the hardware to a read access from the second software (42) that is executing the given process to the hardware.

16. The device (1) according to any one of claims 1 to 15, wherein the first software (41) in operation executes a cyclic process including generation of the process data,
when the cyclic process completes, the first software (41) notifies the switch unit (6) of the completion of the cyclic process,
when the given process completes, the second software (42) notifies the switch unit (6) of the completion of the given process, and
after being notified by both the first software (41) and the second software (42), the switch unit (6) switches the software in operation from the first software (41) to the second (42) software.

17. A software switch program (203a) that causes a processor (205) to execute a process of switching software in operation from first software (41) to second software (42) in device (1) including:
hardware (2) configured to transmit process data to an upper system (7); and
a storage unit (3) that stores the first software (41) that runs to cause the hardware (2) to transmit the process data to the upper system (7) and the second software (42) that runs to cause the hardware (2) to transmit the process data to the upper system (7),
wherein the process includes switching the software in operation from the first software (41) to the second software (42) after a given process based on the second software (42) is executed while the first software (41) is being in operation.

18. A software switch method comprising switching software in operation from first software (41) to second software (42) in device (1) including:
hardware (2) configured to transmit process data to an upper system (7); and
a storage unit (3) that stores the first software (41) that runs to cause the hardware (2) to transmit the process data to the upper system (7) and the second software (42) that runs to cause the hardware (2) to transmit the process data to the upper system (7),
wherein the switching includes switching the software in operation from the first software (41) to the second software (42) after a given process based on the second software (42) is executed while the first software (41) is being in operation.
